# EUROPÄISCHE PATENTSCHRIFT

(11) **EP 0 835 373 B1**
(45) Veröffentlichungstag und Bekanntmachung des Hinweises auf die Patenterteilung: **22.08.2001**
(21) Anmeldenummer: 96919689.8
(22) Anmeldetag: 07.05.1996
(51) Int. Cl.: F02M 31/06

(54) **VORRICHTUNG ZUR REGELUNG DER TEMPERATUR DER ANSAUGLUFT EINER BRENNKRAFTMASCHINE**
DEVICE FOR REGULATING THE INTAKE AIR TEMPERATURE IN AN INTERNAL COMBUSTION ENGINE
DISPOSITIF PERMETTANT DE REGULER LA TEMPERATURE DE L'AIR D'ADMISSION D'UN MOTEUR A COMBUSTION INTERNE

(30) Priorität: 27.06.1995 DE 19523297
(43) Veröffentlichungstag der Anmeldung: 15.04.1998
(73) Patentinhaber: FILTERWERK MANN & HUMMEL GmbH, 71631 Ludwigsburg (DE)
(72) Erfinder: ANDRESS, Heinz, D-71729 Erdmannhausen (DE); ROPERTZ, Peter, D-71696 Möglingen (DE)
(74) Vertreter: Voth, Gerhard, Dipl.-Ing.
(86) Internationale Anmeldenummer: EP9601893
(87) Internationale Veröffentlichungsnummer: WO9701703

(56) Entgegenhaltungen:
- DE-A- 1 936 598
- DE-A- 2 162 454
- DE-A- 2 716 512

## Beschreibung

Die Erfindung betrifft eine Vorrichtung zur Regelung der Temperatur der Ansaugluft einer Brennkraftmaschine nach dem Oberbegriff des Hauptanspruchs.

Derartige Vorrichtungen, wie sie beispielsweise aus der DE-PS 15 26 662 bekannt wurden, sind einfach im Aufbau und dementsprechend kostengünstig herstellbar. Der Wachsthermostat bildet ein Regelelement mit ausreichenden Kräften und genügend Stellwegen für den vorgesehenen Zweck.

Ein Nachteil dieser Vorrichtung ist jedoch darin zu sehen, dass sämtliche Komponenten im Strömungskanal der Kaltluft bzw. der Mischluft angeordnet sind, was einen erhöhten Strömungswiderstand bewirkt. Man ist deshalb bestrebt, die Strömungsvorrichtung möglichst strömungsgünstig auszubilden und größere Elemente zu vermeiden.

Aus der DE-OS 34 08 609 ist eine Vorrichtung bekannt, welche in einem Teilstromkanal untergebracht ist. Diese Vorrichtung wird von Mischluft umspült, wobei jedoch auch hier die Mischluft erhebliche Durchflusswiderstände zu überwinden hat.

Es ist weiterhin aus der US-PS 43 40 172 eine Vorrichtung zum Regeln der Temperatur der Ansaugluft einer Brennkraftmaschine bekannt. Diese befindet sich ebenfalls im wesentlichen im Mischluftkanal und steuert von dort aus zwei parallel angeordnete Klappen, die gegensinnig arbeiten.

Ein Nachteil dieser Einrichtung ist darin zu sehen, dass der Mischluft erhebliche Strömungswiderstände entgegenstehen. Außerdem ist aufgrund des Konstruktionsprinzips sowohl eine Rückstellfeder für den Wachsthermostat als auch eine Überhubkompensationsfeder und eine Rückstellfeder für die Steuerklappe erforderlich.

Die Rückstellfeder für den Wachsthermostat und die Überhubfeder sind konzentrisch ineinander angeordnet. Ein Nachteil dieser Anordnung liegt jedoch darin, dass hier der Durchmesser der Vorrichtung sehr stark vergrößert wird und darum wiederum die Strömungseigenschaften sehr stark beeinflusst werden.

Aus der DE- A 2 716 512 ist ein Wachsthermostat bekannt. Dieser verstellt über eine Zugstange eine Steuerklappe, wobei eine Überhubfeder zur Aufnahme eines Überhubs des Wachsthermostates vorgesehen ist. Eine solche Einrichtung zeigt auch die DE- A 2 162 454. Der Nachteil der gezeigten Einrichtung besteht darin, dass auch dort der Mischluft erhebliche Strömungswiderstände entgegenstehen

Der Erfindung liegt die Aufgabe zugrunde, die genannten Nachteile zu vermeiden und eine Vorrichtung zum Regeln der Temperatur der Ansaugluft einer Brennkraftmaschine zu schaffen, die strömungsgünstig und zuverlässig arbeitend im Ansaugkanal angeordnet werden kann.

Diese Aufgabe wird ausgehend von dem Oberbegriff des Hauptanspruchs durch dessen kennzeichnende Merkmale gelöst.

Der wesentliche Vorteil der Erfindung liegt darin, dass durch die Anordnung der Überhubfeder auf der Steuerklappe eine sehr schlanke Bauweise der gesamten Vorrichtung erreicht wird. Außerdem kann die Gesamtlänge der Vorrichtung verkürzt werden, da die Überhubfeder nicht vor dem Befestigungspunkt der Zugstange an der Steuerklappe, sondern nach dem Befestigungspunkt der Zugstange an der Steuerklappe angeordnet ist.

Ein weiterer Vorteil liegt auch darin, dass eine zusätzliche Schließfeder für die Steuerklappe, welche das Klappern der Steuerklappe verhindern soll, nicht mehr erforderlich ist.

Gemäß der Erfindung weist die Längsführung einen Haken auf, welcher an der Steuerklappe angeordnet ist. An diesem Haken greift die Zugstange an. Dieser Haken ist gleichzeitig auch Anlagepunkt für ein Schiebeelement, welches in der Längsführung angeordnet ist. In der Normalstellung liegt das Schiebelement damit auf der einen Seite in der Hakenöse und auf der anderen Seite an der Längsführung.

Eine Ausgestaltung der Erfindung sieht vor, die Steuerklappe mit einem sog. Luftdämpfungsglied zu versehen. Dies ist ein im wesentlichen hohlzylinderförmiger Ansatz, der in den Warmluftkanal hineinreicht und die Luftströmung nahe der Geschlossenstellung steuert.

Eine weitere Ausgestaltung der Erfindung sieht vor, die Zugstange, welche einerseits an dem Wachsthermostaten angeordnet ist, auf der ihr gegenüberliegenden Seite in einer gehäusefesten Führung zu lagern. Diese Führung kann in einfacher Weise eine Bohrung sein, durch welche die Zugstange hindurchgeführt ist.

Der Haken für die Zugstange und das Schiebeelement ist einseitig offen, wobei der Öffnungswinkel begrenzt ist, so dass ein Überhub nur dann das Schiebeelement längs der Führung bewegen kann, wenn die Steuerklappe vollständig geschlossen ist. Dies hat den Vorteil, dass die gesamte Vorrichtung störungsfrei arbeitet, d. h. ein Verkanten oder ein Verklemmen der Steuerklappe und eine dadurch bedingte Fehlstellung aufgrund der zu frühen Auslösung des Überhubweges kann nicht erfolgen.

In vorteilhafter Ausgestaltung der Erfindung werden beide Zuströmöffnungen, d. h. die Zuströmöffnung für die Kaltluft und die Zuströmöffnung für die Warmluft durch den Wachsthermostaten und die Steuerklappe geöffnet bzw. geschlossen. Eine zweite Klappe, die zu einer Erhöhung des Strömungswiderstandes führen würde, ist damit nicht erforderlich.

Diese und weitere Merkmale von bevorzugten Weiterbildungen der Erfindung gehen außer aus den Ansprüchen auch aus der Beschreibung und den Zeichnungen hervor.

Die Erfindung wird nachfolgend anhand von Ausführungsbeispielen näher erläutert. Es zeigt:
- Figur 1: die Schnittdarstellung einer Vorrichtung zur Regelung der Temperatur der Ansaugluft einer Brennkraftmaschine in Warmluftgeschlossenstellung,
- Figur 2: eine Detaildarstellung des Zugstangenhakens,
- Figur 3: die in Figur 1 gezeigte Vorrichtung in Warmluftoffenstellung,
- Figur 4: die in Figur 1 gezeigte Vorrichtung in Warmluftgeschlossenstellung mit Überhub.

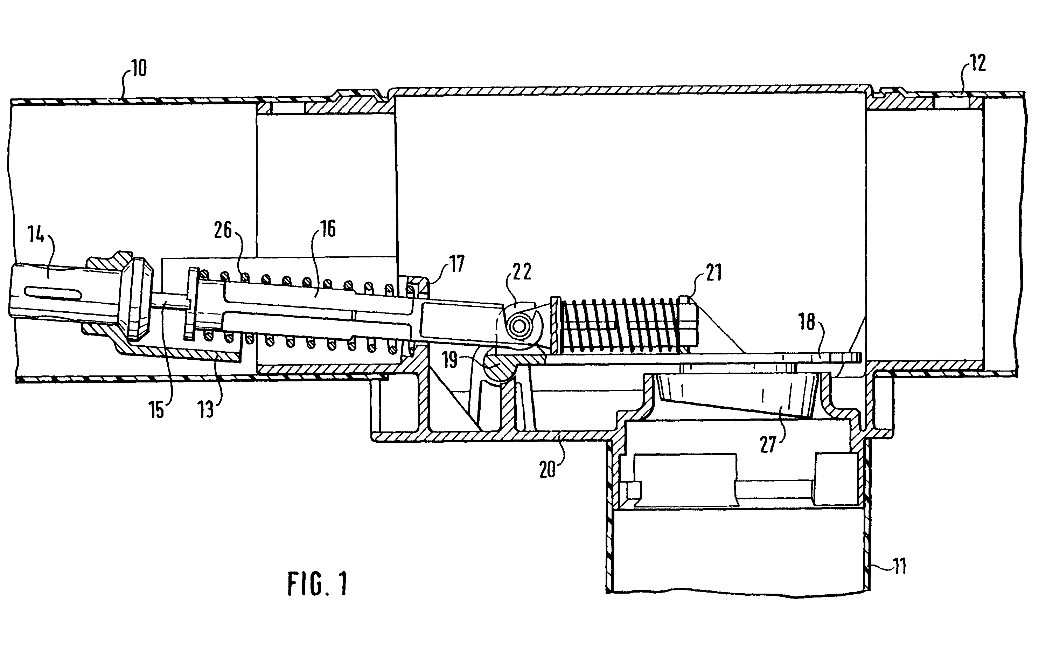

Figur 1 zeigt eine Vorrichtung zur Regelung der Temperatur der Ansaugluft mit einem Kaltluftkanal 10, einem Warmluftkanal 11 sowie einem Mischluft- bzw. Rohluftkanal 12. Jeder Kanal ist mit einem Anschlussstutzen versehen, an dem jeweils ein Luftführungsschlauch o. ä. angeschlossen werden können. Im Kaltluftkanal 10 befindet sich, auf einem Träger 13 angeordnet, ein Wachsthermostat 14. Der Stößel 15 des Wachsthermostaten 14 ist mit einer Zugstange 16 verbunden. Diese Zugstange 16 ist an ihrem rechtsseitigen Ende in einer gehäusefesten Führung 17 axial beweglich gelagert.

Der Warmluftkanal 11 ist mit einer Steuerklappe 18 verschlossen. Die Steuerklappe ist drehbeweglich um den Drehpunkt 19 an dem Gehäuse 20 der Vorrichtung gelagert. Auf der Steuerklappe befindet sich eine Führung 21 sowie ein Haken 22.

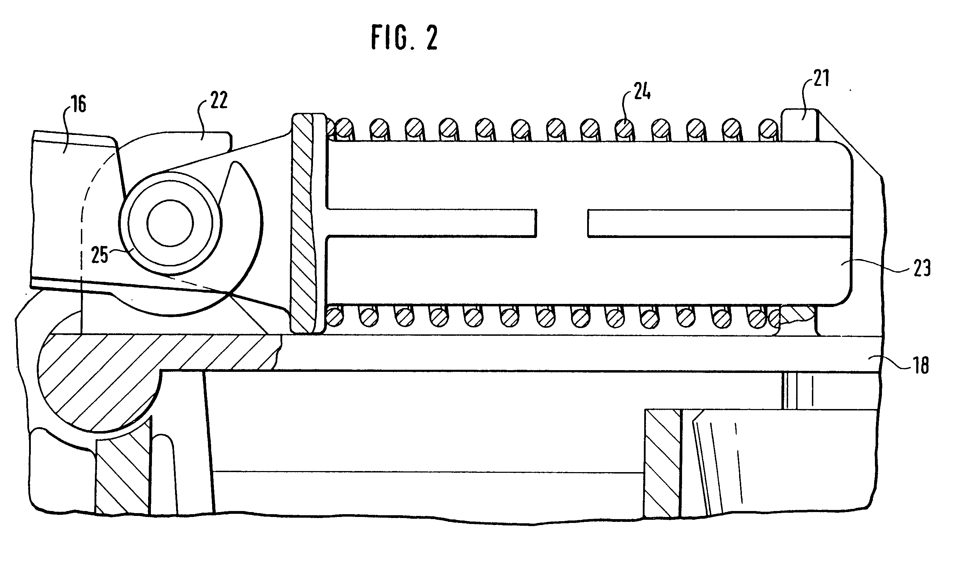

Figur 2 zeigt in einer Detaildarstellung diese Steuerklappe 18 mit dem Haken 22 und der Führung 21. Zwischen Haken und Führung ist ein Schiebeelement 23 vorgesehen. Dieses kann eine Längsbewegung, d. h. längs der Steuerklappe 18 ausführen und wird durch eine Druckfeder 24 mit einer nach links gerichteten Kraft beaufschlagt, so dass das linksseitig an dem Schiebeelement 23 angeordnete Auge 25 im Haken 22 zur Anlage kommt. An dem Auge 25 ist die Zugstange 16 eingerastet.

Die Figur 1 zeigt die Normalstellung oder auch Nullstellung, d.h. die Warmluftklappe ist geschlossen, die Kaltluft kann ungehindert in den Mischluftkanal einströmen, der Thermostat 14 zeigt keinen Überhub.

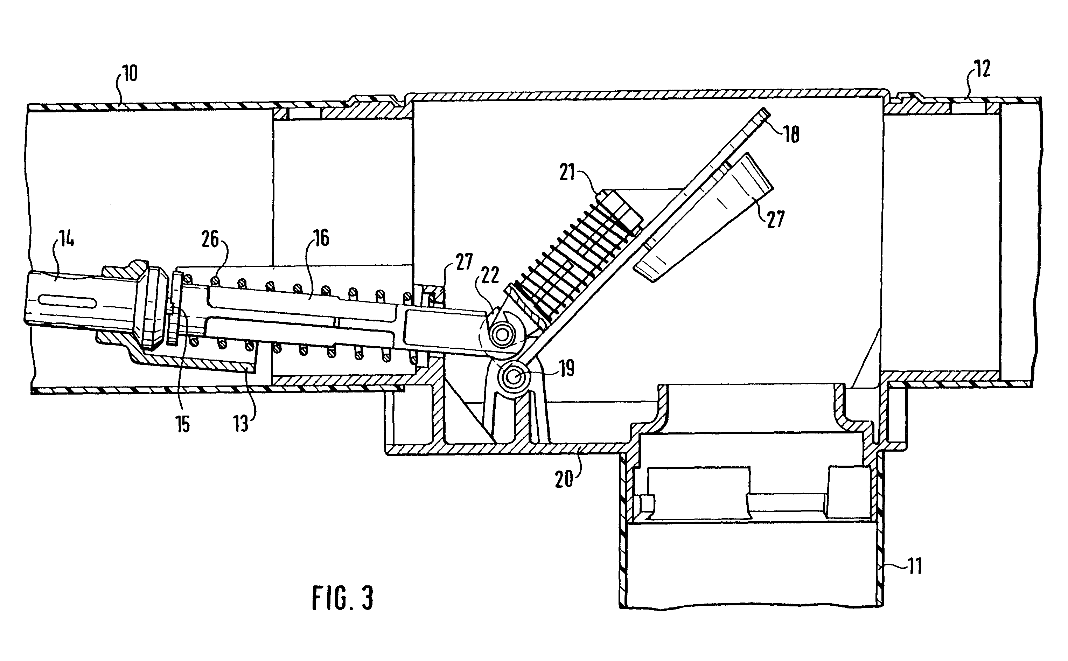

In Figur 3 sind gleiche Teile mit gleichen Bezugszeichen versehen. Hier befindet sich die Steuerklappe in geöffnetem Zustand, d. h. in dieser Stellung kann die Warmluft ungehindert vom Warmluftkanal 11 in den Mischluftkanal 12 einströmen. Der Kaltluftkanal 10 ist geschlossen. Diese Stellung wird erzielt durch eine Kaltluft, die unterhalb eines bestimmten Minimumwertes liegt. Diese Kaltluft verursacht ein Zurückziehen des Stößels 15 des Wachsthermostaten, so dass die auf der Zugstange 16 angeordnete Druckfeder 26 diese Zugstange nach links bewegt und damit die Öffnungsbewegung der Steuerklappe auslöst. Die Steuerklappe schwenkt um einen Winkel von ca. 45° nach oben.

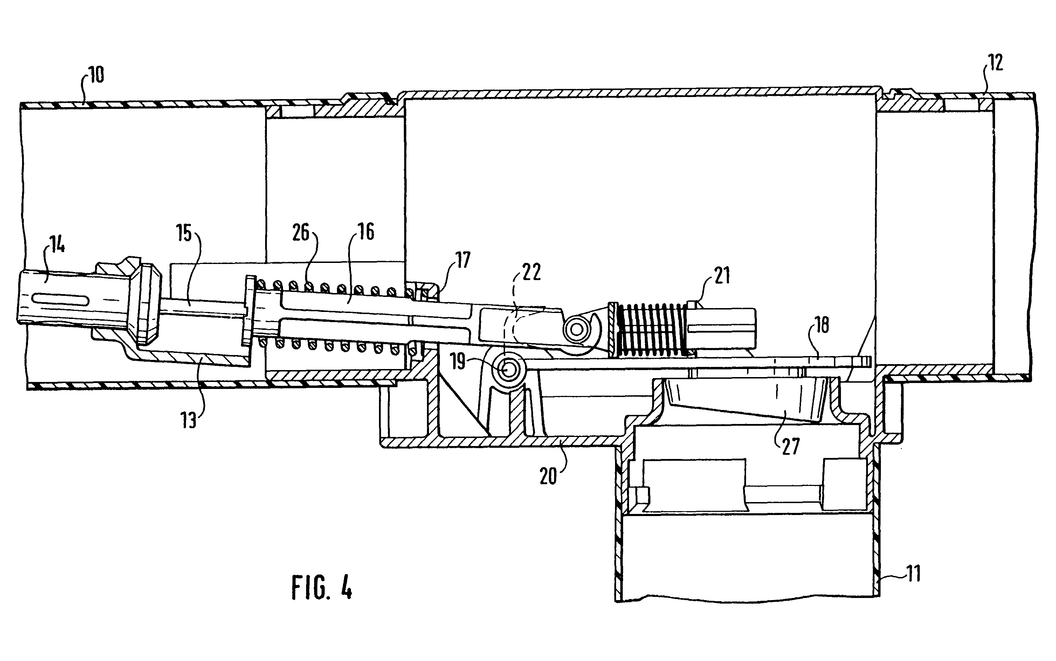

In Figur 4, bei der ebenfalls gleiche Teile mit gleichen Bezugszeichen versehen sind, befindet sich die Steuerklappe wiederum wie in Figur 1 in der Geschlossenstellung, d. h. die Temperatur der Kaltluft ist ausreichend hoch, so dass keine Warmluft zugeführt werden muss. Hier führt jedoch die Temperatur der Kaltluft zu einem Überhub, d. h. der Wachsthermostat hat seinen Maximalhub erreicht. Damit klinkt das Schiebeelement 23 aus dem Haken 22 aus und wird nach rechts entgegen der Federkraft der Feder 24 bewegt. Aufgrund der Führung der Zugstange 16 sowie der Führung des Schiebeelements 23 in der Führung 21 ergibt sich eine definierte Längsbewegung des Schiebeelements 23. Da der Öffnungswinkel des Hakens 22 begrenzt ist, kann das Auge 25 des Schiebeelements 23 nur in dieser Stellung aus dem Haken ausklinken.

In der in Figur 3 gezeigten Stellung ist ein Ausklinken des Schiebeelements aus dem Haken nicht möglich, so dass eine Störung aufgrund eines unbeabsichtigten Entkoppelns nicht auftreten kann.

## Patentansprüche

1. Vorrichtung zur Regelung der Temperatur der Ansaugluft einer Brennkraftmaschine mit einem aus einem Kaltluftkanal (10), einem Warmluftkanal (11) und einem Mischluftkanal (12) bestehenden Rohluftkanal mit einer im Rohluftkanal angeordneten Steuerklappe (18), die in ihrer einen Endstellung den Kaltluftkanal (10) und in ihrer anderen Endstellung den Warmluftkanal (11) abschließt und durch einen von angesaugter Kaltluft umströmten Wachsthermostaten (14) schwenkbar ist, wobei eine Zugstange (16) vorgesehen ist, über welche der Wachsthermostat (14) mit der Steuerklappe (18) verbunden ist und sich auf der Zugstange (16) eine Rückstellfeder (26) befindet, wobei ferner eine Überhubfeder (24) vorgesehen ist zur Kompensation des Überhubs des Wachsthermostaten (14), wobei auf der Steuerklappe (18) eine Längsführung (21) vorgesehen ist, wobei diese Längsführung zur Aufnahme des Überhubs ausgebildet ist und die Überhubfeder (24) an der Längsführung (21) angeordnet ist, dadurch gekennzeichnet, dass die Längsführung einen Haken (22) aufweist, welcher an der Steuerklappe (18) angeordnet ist und an welchem die Zugstange (16) angreift und ferner ein Schiebeelement (23) vorgesehen ist, welches in der Längsführung (21 ) angeordnet ist.

2. Vorrichtung nach Anspruch 1, dadurch gekennzeichnet, dass die Steuerklappe (18) ein Luftdämpfungsglied (27) aufweist, welches nahe der Geschlossenstellung ein Schwingen der Klappe (18) verhindert.

3. Vorrichtung nach einem der vorigen Ansprüche, dadurch gekennzeichnet, dass die Zugstange (16) an der dem Wachsthermostaten (14) gegenüberliegenden Seite in einer gehäusefesten Führung (17) angeordnet ist.

4. Vorrichtung nach einem der vorigen Ansprüche, dadurch gekennzeichnet, dass eine Auslösung des Schiebeelements (23) aus dem Haken (22) erst bei vollständig geschlossener Steuerklappe (18) erfolgt.

5. Vorrichtung nach einem der vorigen Ansprüche, dadurch gekennzeichnet, dass beide Zuströmöffnungen (10, 11) durch den Wachsthermostaten (14) gesteuert sind.

## Claims

1. Apparatus for regulating the temperature of the intake air of an internal combustion engine, having an unfiltered air duct, which comprises a cold air duct (10), a warm air duct (11) and a mixed air duct (12), and which is provided with a control flap (18) disposed in the unfiltered air duct, said flap closing the cold air duct (10) in its one end position and the warm air duct (11) in its other end position and being pivotable by means of an expanding thermostat (14), which has drawn-in cold air flowing therearound, wherein a tie-rod (16) is provided, via which the expanding thermostat (14) is connected to the control flap (18), and a restoring spring is situated on the tie-rod (16), wherein also an excess travel spring (24) is provided to compensate for the excess travel of the expanding thermostat (14), wherein a longitudinal guiding means (21) is provided on the control flap (18), and wherein this longitudinal guiding means is configured to accommodate the excess travel, and the excess travel spring (24) is disposed on the longitudinal guiding means (21), characterised in that the longitudinal guiding means has a hook (22), which is disposed on the control flap (18), and which co-operates with the tie-rod (16), and a sliding element (23) is also provided, which is disposed in the longitudinal guiding means (21).

2. Apparatus according to claim 1, characterised in that the control flap (18) has an air damping member (27), which prevents the flap (18) from pivoting close to/in the vicinity of the closed position.

3. Apparatus according to one of the previous claims, characterised in that the tie-rod (16) is disposed on the side situated opposite the expanding thermostat (14) in a guiding means (17) integral with the housing.

4. Apparatus according to one of the previous claims, characterised in that the sliding element (23) is only released from the hook (22) when the control flap (18) is completely closed.

5. Apparatus according to one of the previous claims, characterised in that both inlet apertures (10, 11) are controlled by the expanding thermostat (14).

## Revendications

1. Dispositif de régulation de la température de l'air d'admission d'un moteur à combustion interne comprenant une tubulure d'air d'admission composée d'un canal d'air froid (10), d'un canal d'air chaud (11) et d'un canal d'air de mélange (12), avec un volet de réglage (18), monté dans la tubulure et qui dans une position extrême isole le canal d'air chaud (11), et dans l'autre position extrême isole le canal d'air froid (10), en pouvant pivoter sous l'effet d'un thermostat à dilatation (14) traversé par un courant d'air d'admission froid, avec une tige de manoeuvre (16) reliant le thermostat à dilatation (14) au volet de réglage (18), et avec un ressort de rappel (26) disposé autour de la tige de manoeuvre (16), avec également un ressort de surcourse (24), ce ressort étant destiné à compenser la surcourse du thermostat à dilatation (14), alors qu'un guide longitudinal (21) fixé sur le volet de réglage (18), est dimensionné pour encaisser la surcourse, le ressort de surcourse étant fixé autour du guide longitudinal (21),
caractérisé en ce que
le guide longitudinal comporte un crochet (22) fixé sur le volet de réglage (18) et dans lequel s'enclenche la tige de manoeuvre (16), et en outre un élément coulissant (23) est monté dans le guide longitudinal (21).

2. Dispositif selon la revendication 1,
caractérisé en ce que
le volet de réglage (18) comporte un organe d'amortissement d'air (27) destiné à empêcher la vibration du volet (18) à l'approche de sa position de fermeture.

3. Dispositif selon l'une quelconque des revendications précédentes,
caractérisé en ce que
la tige de manoeuvre (16) est montée du côté opposé au thermostat à dilatation (14), à l'intérieur d'un guidage (17) fixé au boîtier.

4. Dispositif selon l'une quelconque des revendications précédentes,
caractérisé en ce que
le décrochement de l'élément coulissant (23) de son crochet (22) ne se produit que dans la position entièrement fermée du volet de réglage (18.)

5. Dispositif selon l'une quelconque des revendications précédentes,
caractérisé en ce que
les deux ouvertures d'admission d'air (10, 11), sont commandées par le thermostat à dilatation (14).
